# EUROPEAN PATENT SPECIFICATION

(11) **EP 1 410 713 B1**
(45) Date of publication and mention of the grant of the patent: **21.05.2008**
(21) Application number: 03078601.6
(22) Date of filing: 25.07.2000
(51) Int. Cl.: A01N 25/30

(54) **Hybrid ionic phosphorus surfactant adjuvants for bioactive compositions**
Hybride ionische Phosphortensidzusatzstoffe für bioaktive Zusammensetzungen
Adjuvants tensioactifs ioniques hybrides au phosphore pour compositions bioactives

(30) Priority: 27.07.1999 US 145719 P
(43) Date of publication of application: 21.04.2004
(62) Divisional of application: 00950658.5
(73) Proprietor: RHODIA INC., Cranbury, NJ 08512 (US)
(72) Inventor: Reierson, Robert Lee, West Windsor New Jersey 08550 (US)
(74) Representative: Kyle, Diana

(56) References cited:
- EP-A- 0 243 872
- US-A- 4 233 192
- US-A- 4 824 603
- US-A- 5 846 923

## Description

### Field of The Invention

This invention relates to the use of phosphate amphoteric surfactants having multiple ionic charges to increase the stability of bioactive compositions and enhance the bioefficacy of the active.

### Background of The Invention

Numerous organic bioactives, especially pesticides, i.e., chemicals that are useful in the control of insects, fungi, weeds, and the like have been developed in recent years. Regardless of whether the pesticide is inherently water soluble or water insoluble, it is desirable to use the same in an aqueous medium rather than in a non-aqueous solvent which is more difficult to use by the formulator and applicator, could cause environmental damage, is more costly and is in general, less desirable. Water-based dispersions, emulsions, and/or solutions can be prepared from most pesticides using selected surfactants. Proper selection of the surfactant can also improve the efficacy of pesticidal compositions.

Surfactants have proven to be especially useful in the preparation of herbicidal compositions whether the herbicide is water soluble or insoluble. When the herbicide is water insoluble, the surfactant can be used to make a water dispersible herbicide composition. When the herbicide is water soluble, the surfactant can often be used to improve the herbicidal effectiveness of the herbicidal composition.

One class of surfactants that has found much commercial success in the preparation of herbicidal compositions includes the polyoxyalkylene alkylamines. These compounds have the necessary surface activity so that many otherwise water insoluble herbicides, as well as water soluble herbicides, can be formulated into concentrates which will form useful dispersions, emulsions, and solutions in water. In addition, herbicides formulated into dispersions, emulsions, and solutions using these surfactants often have improved herbicidal properties.

However, while the polyoxyalkylene alkylamine compounds have excellent surfactant properties and often enhance the bioefficacy of phytotoxicants, they unfortunately are irritants, especially producing eye irritation and must be used with a high degree of caution.

Many efforts have been made to reduce the irritancy of the polyoxy alkylene alkylamine compounds while still retaining their surfactant effectiveness in stabilizing agricultural formulations and enhancing bioeffectiveness. Most of these efforts entail the addition of multiple surfactant compounds to the alkylamine - bioactive composition.

Perhaps the most widely used herbicide worldwide is glyphosate, which chemically is N-phosphonomethylglycine. This product is normally used in an agriculturally acceptable form, such as a water soluble salt, e.g., the isopropylamine salt. Often used surfactants for the preparation of glyphosate concentrates, which can then be diluted with water for use by the applicator, are the aforementioned polyoxyalkylene alkylamines, especially the ethoxylated tallow amines.

EP-0 243872 A describes pesticidal concentrate compositions containing a pesticide such as glyphosate and a surfactant comprising a hydrocarbyl or hydrocarbylene chain carrying a group capable of forming hydrogen bonds with water, such as fatty alcohols and amino group-containing surfactants, and optionally another surfactant which is an ionic or non-ionic surfactant.

It is therefore an object of the present invention to provide stable surfactant containing bioactive compositions with enhanced bioeffectiveness.

Another object of the present invention is to provide stable pesticidal compositions, especially herbicidal compositions, and most especially those containing glyphosate, having agriculturally acceptable efficacy and reduced eye irritation.

Another object of the present invention is to provide new methods for controlling the growth of weeds and other vegetation.

Other objects of the present invention will become apparent from the following description.

### Summary of The Invention

The present invention is directed to bioactive compositions, particularly pesticidal compositions, and most particularly herbicidal compositions comprising a pesticide which is the herbicide N-phosphonomethyl glycine or a salt thereof and a surfactant composition comprising a phosphate amphoteric surfactant having multiple ionic charges. These compositions are readily dispersible in water so as to prepare extremely stable, aqueous compositions useful for, among other things, the control of weeds, insects, fungi, and the like in the absence of severe eye irritancy such as is associated with the use of the polyoxyalkylated alkylamine surfactants.

The aqueous solution comprising a herbicidally effective amount of a glyphosate herbicide, either in acid or salt form, is stabilized and has herbicidal effectiveness enhanced by the presence of a potentiatingly effective amount of the phosphate amphoteric surfactant of the instant invention.

### Detailed Description of The Invention

The compositions of the instant invention comprise N-phosphonomethyl glycine or a salt thereof and an effective amount of a phosphate amphoteric surfactant having multiple ionic charges. It has been discovered that these amphoteric surfactants increase the stability and enhance the bioeffectiveness of bioactives in aqueous compositions.

Amphoterics are, by definition, surfactants which, depending on the pH, can have anionic and/or cationic properties in aqueous medium. An amphoteric contains at least one acidic group and at least one basic group. The pH where these groups internally neutralize each other, producing a zwitterion (a cationic and anionic group in the same molecule), is called the isoelectric point (or isoelectric area). At pH above the isoelectric area, amphoterics act as anions and below the isoelectric area they act as cations with external counter ions (cations and anions, respectively).

The cationic functionality is generally a protonated secondary or tertiary amine group (in so-called weak nitrogen amphoterics), or a quaternary ammonium group (in strong nitrogen amphoterics or alkylbetaines). Weak nitrogen amphoterics are protonated only at lower pH levels whilst alkyl betaines retain their positive charge over virtually the whole pH range. At least one anionic group in the surfactant molecules of this invention is a phosphate moiety.

Amphoteric surfactants may have an equal or unequal number of anionic and cationic groups with the charge balanced by external counter ions. The number of such groups influences the isoelectric area, as does the ionic strength of such groups.

The source for the cationic functionality in the phosphate amphoterics of the instant invention is a nitrogen containing moiety.

The amphoteric surfactant compositions useful in the instant invention has the formula: 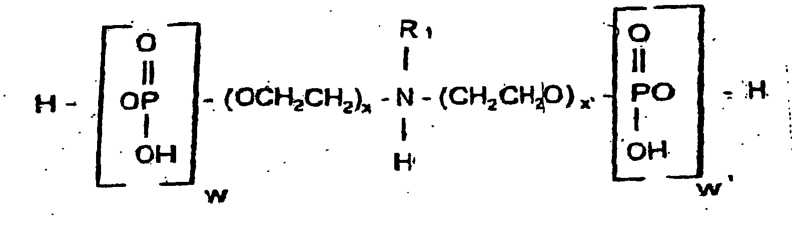 wherein R₁ is selected from C₁ to C₃₆ straight or branched chain alkyl groups and mixtures thereof,
w and w' are independently 0 or 1 with the proviso that both are not equal to
0; and
x and x' are independently 0 to 50 obtained by phosphation of cocoamine polyoxyethylene-5 bis-ethoxylate with polyphosphoric acid.

The pesticide is the herbicidal active N-phosphonomethyl glycine a.k.a. glyphosate and its salts such as the isopropylamine or trimethyl sulfonium salt (sulfosate).

By the term "stabilizingly effective amount" is meant that in a concentrated formulation of the bioactive in aqueous media i.e. from about 20 to about 70 percent by weight, no phase separation occurs over an extreme temperature storage range of from about 4°C to about 55°C over a period of three days, i.e. 72 hours.

The following Examples are provided by way of representation of the present invention and not by way of limitation.

### Example 1

### Phosphation of Cocoamine POE-5 Bis-ethoxylate with 115% Polyphosphoric Acid

An oven dried apparatus consisting of a 1L, 4-necked, round bottomed flask, a paddle stirrer, thermocouple, pressure equalizing addition funnel and a Claisen adaptor containing an argon gas inlet and outlet through a silicone oil filled bubbler tube was assembled while warm and flushed with argon for an hour with heating to provide a moisture free system. The flask was quickly charged with 402.88 g of Rhodameen C-5, a trademark of Rhodia Inc. for ethoxylated cocoamine, (0.99 mole) and the funnel with about 200 g 115% polyphosphoric acid. The stirred liquor was warmed to 52°C in an oil bath and the acid was added over a three hour period. The heat of neutralization raised the temperature to 80°C in the first hour so the bath was removed for an hour then returned as the temperature had dropped to 71°C and stirring had become very difficult. The liquor temperature returned quickly to 77°C and reached 88°C by the end of the net addition of 197.65g (2.320 mole). The liquor was heated to and maintained at 115° to 120° for four hours then allowed to cool to about 112°. Deionized water, 452.21 g, was added slowly through a fresh addition funnel over a four hour period as the liquor temperature was decreased gradually to 95° to balance the high liquor viscosity with the gentle boiling of the water as it was blended in. Heating at 95° was continued for an additional hour to complete the hydrolysis of the residual pyrophosphoric acid intermediates and obtain a clear, viscous, 57% solids solution.

Analysis of the solution by ³¹p and ¹³C nuclear magnetic resonance spectroscopy showed the phosphate product molar ratios to be 0.340 phosphoric acid, 0.623 monoalkyl phosphates and 0.036 dialkyl phosphates. Conversion of the alcohol groups was about 70%.

### Example 2

### Phosphation of Cocoamine POE-5 Bis-ethoxylate with Hybrid Reagent

The process of Example 1 was repeated except that the phosphation was modified in accord with the technology described in U.S. Patents 5,550,274 and 5,554,781.

The pre-dried 1L flask was quickly charged under argon atmosphere with 304.01 g of Rhodameen C-5 ethoxylated cocoamine (0.751 mole) and the funnel with about 71.04 g 105% polyphosphoric acid (Rhodia Super Phos 105^{®}). The stirred liquor was warmed to 40°C by a thermostatically controlled infrared heat lamp and the acid was added over a 75 minute period. The heat of neutralization quickly raised the temperature to 50°C (lamp off automatically) and the viscosity of the solution increased significantly as the salt formed, so the lamp thermocouple controller set point was raised to 60°C. The final temperature was 63°C; total acid charge was 70.46 g (0.755 mole). The liquor was allowed to cool to about 54°C while a pre-dried pressure equalizing powder addition funnel with a screw feed system was charged with 92.24 g phosphoric anhydride and set in place of the acid addition funnel. The anhydride was added slowly, over a 135 minute period, to get good dispersion of the powder into the viscous solution. The temperature was held between 54°C and 59°C by periodic application of a room temperature water bath. Total charge of phosphoric anhydride was 91.24 g (0.321 mole). Upon completion of the addition, the viscous slurry was heated slowly by oil bath to 110°C over a 210 minute period so that the liquor temperature remained close to that of the oil bath and stirring could be maintained. After seven hours, the temperature was allowed to cool to 100°C, nominally, and 298.81 g deionized water was added over a two hour period. Stirring was continued for another 45 minutes during which the temperature was decreased gradually to 95°C to complete the hydrolysis of the residual pyrophosphoric acid intermediates and obtain a clear, viscous, 61% solids solution.

Analysis of the solution by ³¹P and ¹³C nuclear magnetic resonance spectroscopy showed the phosphate product molar ratios to be 0.365 phosphoric acid, 0.497 monoalkyl phosphates and 0.138 dialkyl phosphates. Conversion of the alcohol groups was over 90%.

### Example 3

### Glyphosate Formulation Stability Evaluation

Rodeo, a trademark of the Monsanto Co. for a commercially available solution of glyphosate (N-phosphonomethyl glycine) in the form of its isopropylamine salt (53.8% conc. by wt), was blended with the product mixtures of Examples 1 and 2 and the stability of the solution with respect to phase separation under extreme temperature storage conditions was evaluated. The ester mixture of Example 1, with low dialkyl phosphate content, is primarily composed of compounds of the formula IV wherein R₄ is hydrogen, R₅ is OH, Y is hydrogen, t is 0 with either one or both hydroxyl groups converted to phosphate esters, w and w' equals 0 or 1 but both cannot be 0. The mixture of Example 2, with higher hydroxyl group conversion and higher dialkyl ester content, would have fewer hydroxyl groups remaining and over one-fourth of the amine starting material would be bound into phosphoamphoteric oligomers of the general structure I, where "m" is a low integer (1 or 2) with the remainder primarily being the mono- and di-phosphate esters of the fatty amine bis-ethoxylate.

**Table 1. Glyphosate Formulations**

| Component | Solution A | Solution B |
|---|---|---|
| Rodeo | 7.63 g | 7.63 g |
| Product from Ex. 1 | 1.00 g | |
| Product from Ex. 2 | | 1.17 g |
| Deionized Water | 1.37 g | 1.20 |

**Table 2. Formulation Stability**

| Formulation | 72 Hours at 55°C | 72 Hours at 4°C |
|---|---|---|
| A | No phase separation | No phase separation |
| B | No phase separation | No phase separation |

The compounds of Examples 1 and 2 passed both the high and low temperature stability evaluation in contrast to other anionic surfactant additives evaluated such as Rhodacal DSB a disodium dodecyl diphenyl oxide disulfonate, Rhodapon OLS a sodium octyl sulfate, Rhodapon CAV a sodium isodecyl sulfate, Rhodapex CO-436 an ammonium nonyl phenol-4(EO) ethoxylate sulfate, Soprophor 4D384 an ammonium tristyrylphenol-16(EO) ethoxylate sulfate, (all of the aforementioned are trademarks of Rhodia Inc.), SXS-40 a 40% (aq.) sodium xylene sulfonate, an ethoxylated tall oil fatty acid, non-ionics such as di- and triethylene glycol, polyethylene glycol (400 mol. wt.), glycerine, Antarox 17-R-4 (EO/PO copolymer) a trademark of Rhodia Inc. for polypropylene oxide capped polyethylene glycol, reverse ethylene oxide/propylene oxide copolymer, and diethylene glycol monobutyl ether.

## Claims

1. An aqueous composition comprising:
a) N-phosphonomethyl glycine or a salt thereof;
b) from 20 to 70% by weight of an amphoteric surfactant having multiple ionic charges; and
c) water
wherein the amphoteric surfactant comprises a compound of the general formula 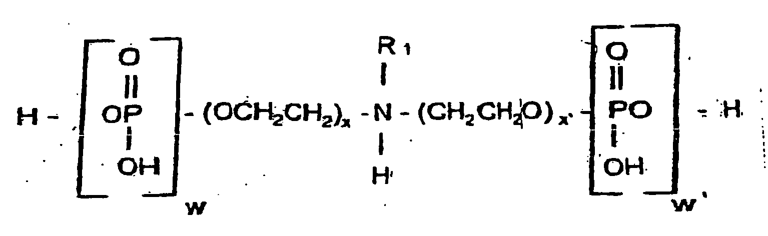 wherein R₁ is selected from C₁ to C₃₆ straight or branched chain alkyl groups and mixtures thereof,
w and w' are independently 0 or 1 with the proviso that both are not equal to
0; and
x and x' are independently 0 to 50 obtainable by phosphation of cocoamine polyoxyethylene-5 bis-ethoxylate with polyphosphoric acid.

## Patentansprüche

1. Wässrige Zusammensetzung, umfassend:
a) N-Phosphonomethylglycin oder ein Salz davon;
b) von 20 bis 70 Gew.-% eines amphoteren oberflächenaktiven Mittels mit mehrfachen Ionenladungen; und
c) Wasser,
wobei das amphotere oberflächenaktive Mittel eine Verbindung der allgemeinen Formel 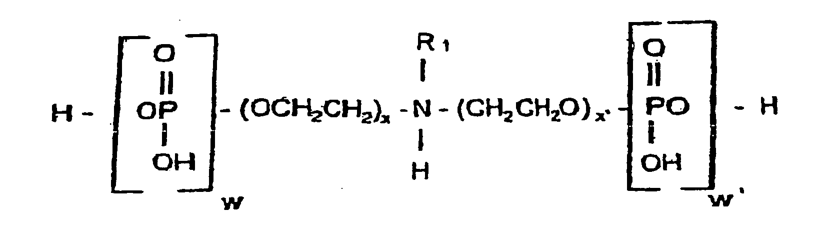 umfasst,
worin R₁ ausgewählt ist aus C₁- bis C₃₆-geradkettigen oder verzweigten Alkylgruppen und Mischungen davon,
w und w' unabhängig 0 oder 1 sind, mit der Maßgabe, dass beide nicht 0 sind; und
x und x' unabhängig 0 bis 50 sind, erhältlich durch Phosphatierung von Kokosamin-Polyoxyethylen-5-bis-ethoxylat mit Polyphosphorsäure.

## Revendications

1. Composition aqueuse comprenant :
a) une N-phosphonométhylglycine ou un sel de celle-ci ;
b) de 20 à 70 % en poids d'un tensioactif amphotère ayant de multiples charges ioniques ; et
c) de l'eau
dans laquelle le tensioactif amphotère comprend un composé de la formule générale : 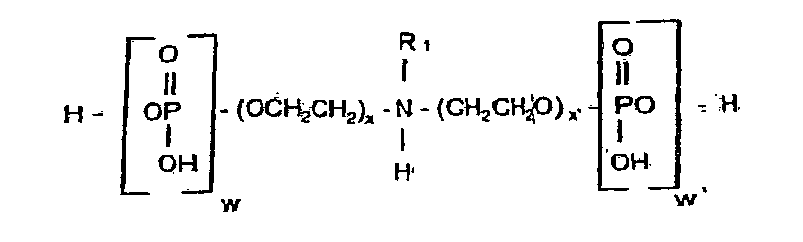 dans laquelle R₁ est choisi parmi les groupes alkyles à chaîne linéaire ou ramifiée en C₁ à C₃₆ et des mélanges de ceux-ci,
w et w' valent indépendamment 0 ou 1, à condition que tous les deux ne valent pas 0 ; et
x et x' valent indépendamment de 0 à 50, pouvant être obtenu par la phosphatation du bis-éthoxylate de cocoamine polyoxyéthylène-5 avec un acide polyphosphorique.
